# EUROPEAN PATENT APPLICATION

(11) **EP 2 095 877 A1**
(43) Date of publication of application: **02.09.2009**
(21) Application number: 09001794.8
(22) Date of filing: 09.02.2009
(51) Int. Cl.: B01L 7/00, G01N 35/00

(54) **Nucleic acid analyzer**

(30) Priority: 29.02.2008 JP 2008048991
(71) Applicant: Hitachi High-Technologies Corporation, Minato-ku Tokyo 105-8717 (JP)
(72) Inventor: Yamamoto, Shuhei, Hitachinaka-shi Ibaraki 312-8504 (JP); Sakurai, Toshinari, Hitachinaka-shi Ibaraki 312-8504 (JP); Shoji, Yoshiyuki, Hitachinaka-shi Ibaraki 312-8504 (JP); Hosoiri, Takehiro, Hitachinaka-shi Ibaraki 312-8504 (JP); Yamashita, Yoshihiro, Hitachinaka-shi Ibaraki 312-8504 (JP); Tobita, Tomoyuki, Hitachinaka-shi Ibaraki 312-8504 (JP)
(74) Representative: Strehl Schübel-Hopf & Partner

(57) **Abstract**

It is an object of the present invention to prevent condensation occurring when reaction solutions in sealed vessels (10) are heated in a nucleic acid analyzer for performing sequential processing in which individual reaction vessels (11) are sequentially fed to a nucleic acid amplification unit in a given cycle. This invention relates to a nucleic acid analyzer including a vessel mounting rack (13) capable of holding the plurality of reaction vessels (11), wherein the reaction vessel mounted on the vessel mounting rack is heated by an adjacent noncontact heat source and air circulation from the heat source (15,16) to a reaction vessel upper portion, and a temperature of the reaction vessel (11) upper portion is kept higher than a temperature of a reaction vessel (11) lower portion. With this invention, condensation possibly occurring on the inner wall of the sealed vessel (10) upper portion due to heating during nucleic acid amplification can be prevented, and more accurate nucleic acid analysis is enabled.

## Description

### BACKGROUND OF THE INVENTION

### 1. Field of the Invention

The present invention relates to a nucleic acid analyzer which amplifies nucleic acids in a sealed vessel.

### 2. Background Art

Analysis of nucleic acids which are substances carrying genetic information has been performed in various fields of academic research, medicine or the like. A nucleic acid amplification technique such as a polymerase chain reaction (PCR) is mostly used as a method for nucleic acid analysis. Here, the PCR is a method for specifically amplifying the base sequence of nucleic acids, and a method capable of detecting a trace amount of nucleic acid with high sensitivity. An apparatus for automatically performing multiple steps including a pre-step such as extraction of nucleic acids and preparation of reaction solutions in addition to an amplification and detection step for serially detecting a product of a nucleic acid amplification process as represented by the PCR is used in the field of clinical examination such as diagnosis of infectious diseases.

In the nucleic acid amplification process as represented by the PCR, a small amount of reaction solution including a sample is heated for a given period of time, and thus, a decrease in reaction solution volume due to evaporation, or a change in component concentration resulting therefrom becomes a problem. The known measures include a method of adding mineral oil to an aqueous reaction solution, and a method of providing a lid on a vessel and hermetically sealing a reaction solution in the vessel.

Also, JP Patent Publication (Kokai) No. 2007-97476A discloses that an evaporating and rising solution is prevented from adhering to the inner wall of a lid member and causing condensation by heating a vessel from above through the lid member by a heating block generally called hot bonnet that is located above the vessel.

### SUMMARY OF THE INVENTION

The inventors of the present application have earnestly studied a nucleic acid analyzer suitable for the field of clinical examination, in particular, heating of reaction solutions.

The method of adding mineral oil has such problems that there is a cost increase due to the addition of a pipetting mechanism and consumption articles, it is necessary to confirm whether the mineral oil itself is completely harmless to an amplification reaction, and the method becomes more complex if the mineral oil needs to be separated after the amplification reaction. Furthermore, in the method of adding mineral oil, a reaction vessel is generally not hermetically sealed, and thus, there is a risk that a reaction solution in the reaction vessel spatters to the surroundings. In particular, in an apparatus in which a pre-step to a nucleic acid amplification step are automated, the reaction vessel is automatically transferred on the apparatus. Thus, if the reaction solution in the vessel spatters to the surroundings during being transferred, not only does contamination occur in the adjacent vessels, but the apparatus and a laboratory where the apparatus is placed are also possibly contaminated. This causes a serious problem especially in the field of clinical examination.

On the other hand, the method of providing a lid on a reaction vessel and hermetically sealing the vessel is useful in solving the aforementioned problem. With the method, there is no risk of contamination between the vessels after the vessels are hermetically sealed. However, for example, when a heating block made of metal with high heat conductivity in which a heat source such as a heater and a thermoelectric cooler such as peltier device is incorporated heats the sealed vessel with a lid which is mounted with its lower portion being in close contact with the heating block, a component evaporating in the vessel causes condensation on the inner wall of the vessel upper portion that is exposed from the heating block and has a relatively low temperature.

The condensation in the vessel causes a problem such as a change in solution level and a change in component concentration due to a decrease in reaction solution volume. Also, while fluorescence detection is generally used as a method of detecting a product of an amplification process in real time, the condensation occurring on the inner wall of the lid disturbs the fluorescence detection in a case where the optical path of excitation light or fluorescence for the fluorescence detection passes through the lid of the vessel upper portion.

The technique for preventing condensation disclosed in JP Patent Publication (Kokai) No. 2007-97476A is at least suitable for a nucleic acid analyzer in which a nucleic acid amplification step is carried out by batch processing. Here, the batch processing indicates processing in which a given number of samples are processed at the same time, and samples exceeding the given number are carried forward to the next processing. In a case where the nucleic acid amplification step is carried out by the batch processing, a maximum of 96 reaction vessels are mounted on a first heating block in which 96 wells are arranged in a grid of 16 by 8, and the 96 reaction vessels are amplified at the same time. In this case, the upper portions of the maximum of 96 reaction vessels can be easily heated by bringing a second heating block into contact with the reaction vessel upper portions. Also, after the amplification reaction, the second heating block can be easily manually or automatically opened and closed in order to replace the reaction vessels with a maximum of 96 reaction vessels which stand by to be mounted next, and the maximum of 96 reaction vessels can be easily manually or automatically replaced and transferred.

However, the batch processing cannot respond to an urgent sample generated during the amplification step that has already been started. In general, in the field of clinical examination, there are not necessarily a large number of samples all the time, and there are many irregular unexpected samples. It is necessary for such irregularly generated individual samples to wait until the amplification step currently in progress is completed. Also, in a case where the number of samples to be amplified next is rather small relative to the number of samples to be processed in the batch processing and integrated vessels in which reaction vessels are coupled together by the number of samples to be processed in the batch processing for facilitating the replacement and transfer of the vessels before and after the batch processing, the unused vessels are wasted, and there is an increase in cost of consumption articles per one test.

On the other hand, in a case of sequential processing in which individual reaction vessels are sequentially fed to a nucleic acid amplification unit in a given cycle, urgent additional samples can be flexibly processed, and the cost of consumption articles per one test is constant.

However, the technique for preventing condensation by heating the vessel upper portions by the second heating block, which is disclosed in JP Patent Publication (Kokai) No. 2007-97476A, is not suitable for the case of sequential processing in which a plurality of samples are respectively sequentially fed to the nucleic acid amplification unit. For example, in the case of the aforementioned example, it is necessary to provide the second heating block that can be independently opened and closed in each of 96 vessel mounting positions, and the apparatus has a very complicated mechanism.

It is an object of the present invention to prevent condensation occurring when a reaction solution in a sealed vessel is heated in a nucleic acid analyzer for performing sequential processing in which individual reaction vessels are sequentially fed to a nucleic acid amplification unit in a given cycle.

The present invention relates to a nucleic acid analyzer including a vessel mounting rack capable of holding the plurality of reaction vessels, wherein the reaction vessel mounted on the vessel mounting rack is heated by an adjacent noncontact heat source and air circulation from the heat source to an upper portion of the reaction vessel, and a temperature of the upper portion of the reaction vessel is kept higher than a temperature of a lower portion of the reaction vessel.

According to the present invention, condensation possibly occurring on the inner walls of the sealed vessel upper portions due to heating at the time of nucleic acid amplification can be prevented, and more accurate nucleic acid analysis is enabled.

### BRIEF DESCRIPTION OF THE DRAWINGS

FIG. 1 is a view of a reaction vessel.
FIG. 2 is a top view of an amplification unit.
FIG. 3 is a sectional view of an amplification unit.
FIG. 4 is a sectional schematic view inside an amplification chamber.
FIG. 5 is a schematic view of a vessel holder of a transfer robot.

### DESCRIPTION OF SYMBOLS

- 9: Lid
- 10: Vessel
- 11: Reaction vessel
- 12: Amplification chamber
- 13: Carousel
- 14: Well
- 15: Heating block
- 16: Heater
- 17: Rotor blade
- 18: Thermometer
- 19,20,21,22: Stepping motor
- 23: Transfer gate
- 24: Thermal insulator
- 25, 26: Fluorescence detector
- 27: Radiating fin
- 28: Chuck
- 29: Claw
- 30: Compression spring

### DETAILED DESCRIPTION OF THE PREFERRED EMBODIMENTS

A present embodiment discloses a nucleic acid analyzer for performing sequential processing in which a plurality of sealed reaction vessels capable of holding nucleic acids are sequentially fed to a nucleic acid amplification unit, including a vessel mounting rack capable of holding the plurality of reaction vessels and whose temperature is regulated by an adjacent noncontact heat source, wherein in the reaction vessel mounted on the vessel mounting rack, an upper portion of the reaction vessel exposed from the vessel mounting rack is heated by air circulation from the heat source to the reaction vessel upper portion, and a temperature of the reaction vessel upper portion exposed from the vessel mounting rack is kept equal to or higher than a temperature of a lower portion of the reaction vessel stored inside the vessel mounting rack.

Also, the present embodiment discloses a nucleic acid analyzer, wherein the sealed reaction vessel is a sealed reaction vessel with a lid.

Also, the present embodiment discloses a nucleic acid analyzer, wherein the nucleic acids are measured by fluorescence measurement through the sealed reaction vessel.

Also, the present embodiment discloses a nucleic acid analyzer, wherein the vessel mounting rack moves and stops along a circulating path in a predetermined cycle.

Also, the present embodiment discloses a nucleic acid analyzer, wherein the vessel mounting rack is a carousel.

Also, the present embodiment discloses a nucleic acid analyzer, wherein the heat source is switched between a contact state and a noncontact state with respect to the vessel mounting rack.

Also, the present embodiment discloses a nucleic acid analyzer, wherein a robot for transferring the reaction vessel to the vessel mounting rack and installing the reaction vessel thereon selectively preliminarily heats the reaction vessel upper portion before the installation.

The aforementioned and additional novel features and advantages of the present invention will be described with reference to the drawings. It is to be noted that the drawings are merely to illustrate the invention and are therefore not to be considered limiting of its scope.

### Embodiment

In the present embodiment, a case in which a loop-mediated isothermal amplification (LAMP) method, which is one of constant-temperature amplification methods, is applied to a nucleic acid analyzer for automatically performing a series of steps of sequentially feeding reaction vessels to a nucleic acid amplification unit in a given cycle, extracting nucleic acids, and amplifying and detecting the nucleic acids will be described.

The LAMP method is a simple and rapid method for gene amplification which basically does not require a temperature change in all the steps including denaturation, and which can detect the presence of an amplified product or amplification within a short period of time by injecting each reagent in a reaction vessel to perform incubation. Also, the LAMP method is an accurate method for gene amplification capable of amplifying only a target gene sequence by using four types of primers to recognize six regions.

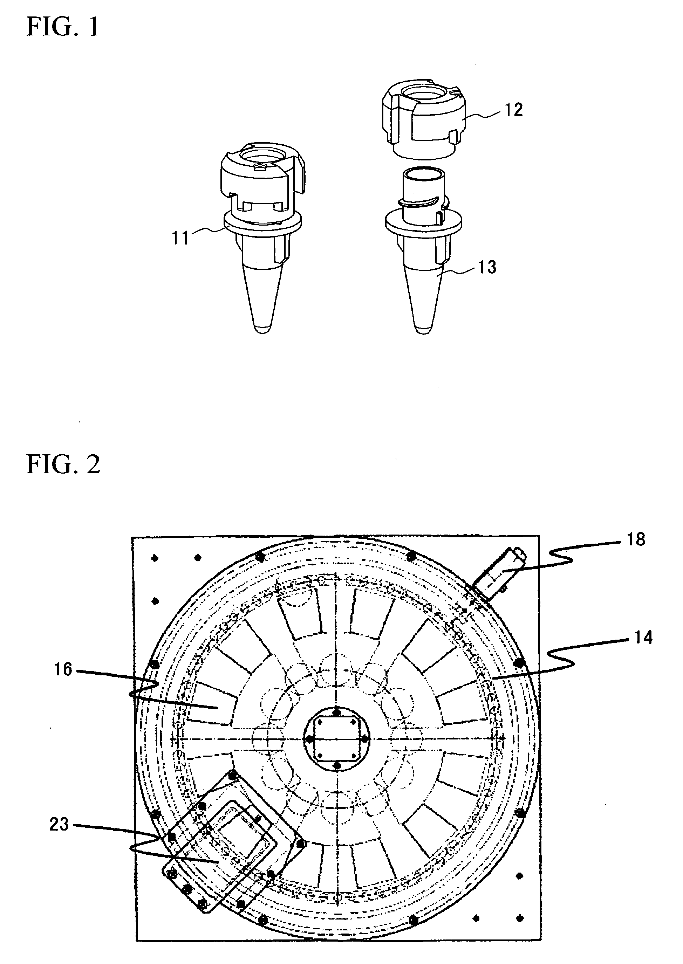

FIG. 1 shows an external view of a sealed vessel with a lid (referred to as reaction vessel 11 below) that is used in the present embodiment. The reaction vessel 11 includes a vessel 10 for holding a reaction solution including a nucleic acid and an amplification reagent, and an openable and closable lid 9 for hermetically sealing the top opening. The vessel 10 has a shape and size compatible with a commercially available 0.2 ml PCR tube, for example. In this case, the vessel can be used in an analyzing apparatus other than the nucleic acid analyzer according to the present embodiment, and versatility is ensured. A standard volume of reaction solution prepared in the vessel is 30 µl in the present embodiment.

On the other hand, the lid 9 is rotated to be opened and closed, for example. The lid 9 is preferably automatically opened and closed by a lid opening/closing mechanism. The lid 9 used in the present embodiment is fixed to the vessel 10 with a female thread (now shown) provided inside the lid 9 being coupled with a male thread portion provided outside the upper portion of the vessel 10. Also, a seal structure (not shown) is provided inside the lid 9, so as to seal the reaction vessel 11 when the lid 9 is fixed to the vessel 10. The reaction solution is thereby prevented from evaporating or spattering to the outside to cause contamination. Furthermore, a groove is provided in the outer side surface of the lid 9. A robot described below can automatically open and close the lid, and transfer the vessel by use of the groove. The reaction vessel 11 which has the reaction solution prepared in the vessel 10 and is closed by the lid 9 is not opened and directly discarded into a discarding box after amplification from the perspective of the prevention of contamination.

When light is detected through a portion of the lid 9, the portion through which the light passes preferably has a thin and flat shape. Also, a nonluminescent and transmissive material is preferably used as the material. A window for light measurement is provided in the center portion of the lid 9 used in the present embodiment.

The reaction vessel 11 which has the reaction solution prepared in the vessel 10 and is closed by the lid 9 is sequentially transferred to an amplification detection unit by the transfer robot. The cycle is 36 seconds in the case of the present embodiment. This cycle is just a processing cycle in which a processing speed of 100 tests/hour can be achieved.

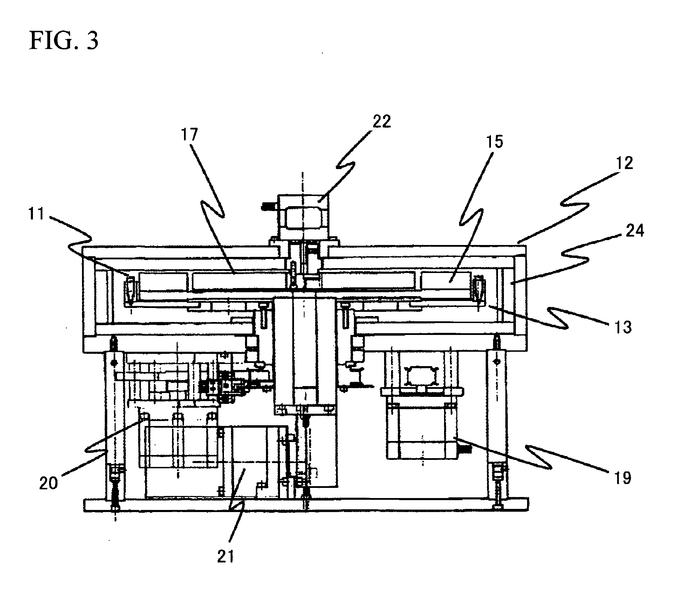

FIG. 2 and FIG. 3 show a top view and a sectional view of the amplification detection unit. A disk-shaped holder (referred to as carousel below) on which a plurality of reaction vessels 11 can be mounted is provided in an amplification chamber 12. The carousel 13 can be rotated and stopped by a stepping motor 19. A total of 72 wells 14 are formed on the carousel 13 at a 5° interval on the circumference with a rotation shaft as the center, and the reaction vessels 11 can be respectively mounted in the wells 14 one by one.

The mounting number of the wells 14 may be optimally selected based on a maximum amplification time and a feeding cycle of the reaction vessels 11, for example. In the case of the present embodiment, the feeding cycle of the reaction vessels 11 is 36 seconds as described above, and the maximum amplification time is 40 minutes. When the reaction vessels 11 continue to be mounted on the carousel 13 without ceasing in the 36-second cycle until 40 minutes that is the maximum amplification time has elapsed for the reaction vessel 11 that was firstly mounted on the carousel 13, 68 reaction vessels 11 are to be mounted on the carousel. However, since the first reaction vessel 11 for which 40 minutes of amplification time has elapsed at this point in time can be removed from the carousel, the 68th reaction vessel 11 may be mounted in the well 14 which is emptied by removing the firstly mounted reaction vessel 11 therefrom. Thereafter, by similarly removing the reaction vessel 11 in which the amplification has been completed, and installing the new reaction vessel 11 at the same time within one cycle, the number of reaction vessels on the carousel 13 is not increased any more. Accordingly, the minimum required number of wells under the condition is 67. The number of wells is 72 in the case of the present embodiment. Therefore, the carousel 13 may be operated with 5 empty wells at all times, or the amplification time may be extended to compensate for the number. In a case where the operating condition is complicated, the number of wells may be correspondingly changed.

The carousel 13 stops rotating in the 36-second cycle in order to install on the carousel 13 the reaction vessel 11 that is carried into the amplification chamber 12 in the 36-second cycle. The reaction vessel 11 carried in from a transfer gate 23 is installed in a predetermined well 14 on the carousel 13 that is immediately beneath the transfer gate by the transfer robot while the carousel 13 stops rotating. Meanwhile, the carousel 13 alternately rotates one revolution plus an amount corresponding to one well, that is, rotates an amount corresponding to 73 wells through 29.2 seconds, for example, out of one cycle of 36 seconds, and stops for the next 6.8 seconds. When the first reaction vessel 11 is mounted in the first well 14 of the carousel 13, the carousel 13 rotates one revolution plus an amount corresponding to one well based on the position, and, stops at a position where the second well 14 next to the first well 14 is immediately beneath the transfer gate. The second reaction vessel 11 is mounted in the second well 14 here. By repeating the above operation, the reaction vessels 11 sequentially transferred in a given cycle can be mounted in the adjacent wells 14 in order from the first well 14.

By repeating the above operation until the 72nd reaction vessel 11 is mounted, all the wells 14 on the carousel 13 are filled with the reaction vessels 11. Although the first reaction vessel 11 is already mounted in a position where the 73rd reaction vessel 11 is to be mounted, that is, the first well 14, the first reaction vessel 11 is carried out of the first well 14 and the 73rd reaction vessel 11 is installed in the emptied first well 14 since 40 minutes that is the necessary amplification time has already elapsed for the first reaction vessel 11 at this point in time. By repeating the same operation thereafter, regardless of the total number of wells disposed on the vessel mounting rack 13, the amplification process of samples in the number exceeding the total number of wells can be sequentially performed.

The transfer gate 23 can be opened and closed by a stepping motor 20, and is opened only when the reaction vessel 11 is transferred and is closed at other times. A motor other than the stepping motor or a solenoid may be also used to drive the transfer gate. The amplification chamber 12 is insulated from outside by a thermal insulator 24. The temperature of inside air thereof is kept higher than that of outside air. However, the air inside the amplification chamber 12 flows outside, and the outside air whose temperature is relatively low flows inside the amplification chamber 12 while the transfer gate 23 is opened. Thus, it is preferable to make a period of time in which the transfer gate 23 is opened as short as possible. It is necessary to remove the already installed reaction vessel 11 in advance in order to install the 73rd and subsequent reaction vessels 11 in the aforementioned example. Thus, the transfer gate 23 needs to be kept opened during a period from when the already installed vessel is removed to when the new vessel is installed. In a case where a single transfer robot sequentially removes and installs the reaction vessels 11, the robot needs to discard the processed vessel that has been carried out, and cannot start installing the next reaction vessel 11 until the discarding operation is completed. Therefore, for example, after the removal of the reaction vessel 11 is started, the transfer gate 23 is closed once before the discarding operation is completed, and then, the transfer gate 23 is opened again immediately before the installation, so that it is possible to shorten the period of time in which the transfer gate 23 is opened between the start of removal and the completion of installation.

Alternatively, the entire carrying-in and carrying-out time can be shortened by reversing the order of removal and installation. To cite the aforementioned example, at the time of mounting the 72nd reaction vessel 11 in the 72nd well 14 that is an empty well, the vessel mounting rack 13 is made to further rotate an amount corresponding to one well, and the first reaction vessel 11 mounted in the first well 14 is removed in advance. By repeating the above operation, one empty well is always held on the vessel mounting rack 13 during rotation. Therefore, when the vessel mounting rack 13 stops next time, the new reaction vessel 11 can be installed first without waiting for the removal and discarding of the already installed reaction vessel. Thereafter, the transfer gate 23 can be closed at the time when the removal of the already installed reaction vessel is started without waiting for the completion of the discarding operation.

As another means, transfer robots for carrying-in and carrying-out the reaction vessels may be separately provided, so that the entire carrying-in and carrying-out time can be shortened for a period of time in which the two transfer robots can operate at the same time.

Fluorescence detection is used in the present embodiment as a method of serially monitoring the amount of amplified product during an amplification step. Since there is a correlation between a change in amplification amount and a change in fluorescence intensity, a target nucleic acid concentration before amplification can be checked by monitoring the temporal change of the fluorescence intensity. In the LAMP method applied in the present embodiment, white turbidity and precipitation are produced as a by-product of an amplification reaction. In order to minimize the influences on the fluorescence detection, the optical path of excitation light and detection light for fluorescence measurement is formed from the reaction vessel upper portion, and each optical system is mounted above the circulating path of the reaction vessels. Each reaction vessel 11 on the carousel 13 thereby passes directly below the optical system each time the carousel rotates one revolution, that is, in a cycle of once every 36 seconds, and the fluorescence measurement is performed at this moment. The fluorescence intensity collected in the 36-second cycle is stored in a control PC for controlling the entire apparatus. In a case where there are a plurality of fluorescent dyes which need to be measured, an excitation and detection optical system having an optimum configuration for detecting each fluorescent dye may be prepared for each fluorescent dye, for example, to mount the optical systems such that their optical paths correspond to the circulating path of the reaction vessels. Alternatively, multi-wavelength fluorescence measurement may be performed at the same time by using an optical system common to the fluorescent dyes and dispersing light by a spectroscope such as a diffraction grating and a prism.

Next, a temperature regulating mechanism in the amplification chamber will be described in detail.

The LAMP method applied in the present embodiment is one of constant-temperature amplification methods capable of amplification using only a single temperature. A standard amplification temperature is 60 to 65°C. The reaction solution in the reaction vessel 11 installed on the carousel 13 is heated by heat conduction from the carousel 13 which is heated to 60 to 65°C. The temperature of the carousel 13 is monitored by a noncontact thermometer 18 that is mounted on the side surface of the amplification chamber 12, and operation of a heat source is controlled such that a difference between the output and a preset temperature becomes smallest.

The noncontact thermometer 18 detects the amount of infrared radiation emitted from the carousel surface, and converts the amount of infrared radiation to a temperature. The carousel 13 in the present embodiment continues to rotate in one direction at all times except for a backlash correction operation. If a contact temperature sensor such as a thermocouple is connected to the carousel 13, a cable connected to the temperature sensor is entangled during the rotation of the carousel 13, and may be possibly disconnected when the cable is entangled beyond the limit. Therefore, the noncontact thermometer is applied in the present embodiment. In a case where the contact temperature sensor is used, it is necessary to ensure the cable length long enough not to be disconnected even when the carousel 13 rotates a given amount, so that after the carousel 13 rotates a given amount, the cable entanglement may be disentangled by always allowing the carousel 13 to rotate the same amount in a reverse direction. If a period of time in which the carousel 13 is rotated in the reverse direction cannot be ensured in relation to processing speed, the temperature sensor and the cable may be connected by a slip ring.

A heater 16 is used as the heat source, and a total of twelve 30W heaters 16 are embedded in the outer peripheral portion of an aluminum heating block 15 at regular intervals. The heaters may be controlled by simple ON-OFF control, or a control method such as PID control may be also used in a case where overshoot or hunting becomes a problem. Also, a thermoelectric cooler such as peltier device or the like may be used as the heat source other than the heater.

A thermocouple (not shown) is embedded in the heating block 15, to monitor the temperature of the heating block 15 in consideration of security. When the temperature of the heating block 15 exceeds an acceptable value, the heater control is stopped by software. Furthermore, in case the software is uncontrollable, power supply to the heaters is forcibly shut down by a thermostat or the like.

The material of the heating block 15 is metal having high heat conductivity. The heating block 15 is mounted above the carousel 13 and inside the circulating path of the reaction vessels 11. The heating block 15 does not contact the carousel 13 at least during the rotation of the carousel 13. Since the heating block 15 does not contact the carousel 13, it is not necessary to rotate the heat source, and the problems of entanglement and disconnection of the cable due to the rotation as described above are eliminated.

The carousel 13 is heated by emission from the heating block 15 and convection of ambient air during its rotation. Therefore, a response to the input to the heaters 16 is slow in comparison with heat transfer by conduction, and thus, it is preferable to make the volume of the carousel 13 as small as possible. In the present embodiment, in order to shorten a heating time from room temperature, the heating block 15 can move up and down by a stepping motor 21, and the heating block 15 is lowered to contact and heat the carousel 13 only during a warm-up period upon the apparatus start up when the carousel 13 does not need to be rotated. When the temperature of the carousel 13 reaches a preset temperature or close to the preset temperature, the heating block 15 is raised and separated from the carousel 13, to prepare for the start of the amplification step, that is, the start of the rotation of the carousel 13. Once the temperature of the carousel 13 reaches close to the preset temperature, even the noncontact heat source can easily stabilize the temperature of the carousel 13 to the preset temperature. Also, when the PID control is used for temperature regulation, the set value may be changed at the time of contact and at the time of noncontact with the heating block. For example, PID setting which focuses on shortening of a rise time to reach the target temperature is employed at the time of contact with the heating block, and PID setting which focuses on stabilizing of the temperature to the target temperature is employed at the time of noncontact with the heating block.

Next, a condensation preventing mechanism for the reaction vessels 11 will be described in detail.

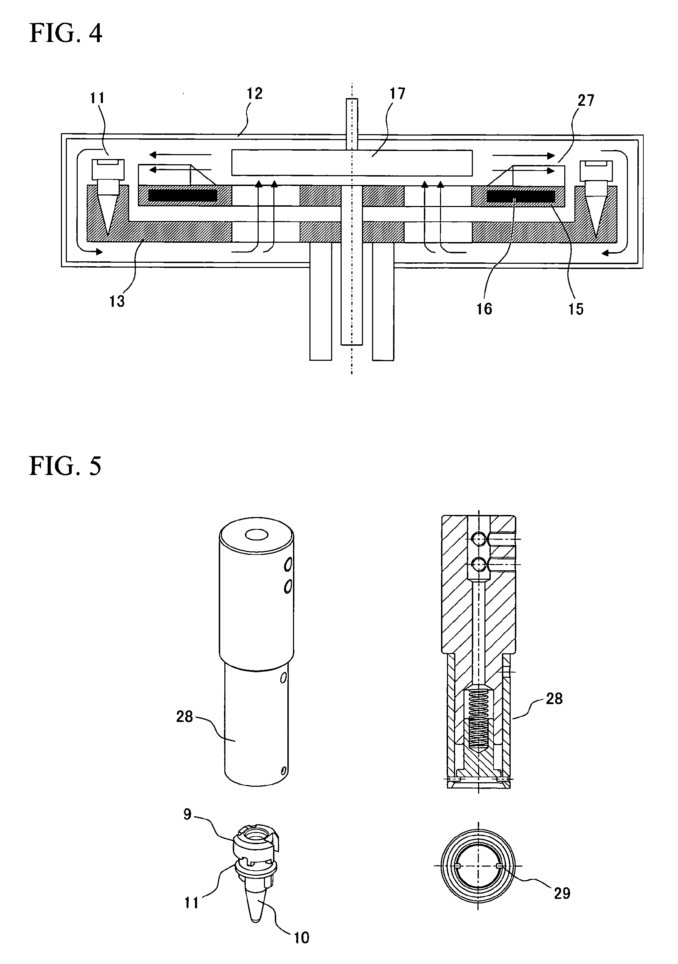

FIG. 4 is a sectional schematic view inside the amplification chamber 12 after the amplification reaction is started. The heating block 15 is held in a noncontact state above the carousel 13. A plurality of cartridge-type heaters 16 are embedded in the outer peripheral portion of the metallic heating block 15 at regular intervals. The heaters 16 uniformly heat the entire heating block. A rotor blade 17 for circulating air inside the amplification chamber 12 is mounted above the center portion of the heating block 15. The rotor blade 17 is rotated by a stepping motor 22.

Arrows in FIG. 4 schematically show the air flow inside the amplification chamber 12. The rotor blade 17 is rotated to produce an air flow in a centrifugal direction. The air blown in the centrifugal direction from the rotor blade 17 is effectively heated through a radiating fin 27 that is disposed on the outer peripheral portion of the heating block 15, and is blown to the upper exposed portions of the reaction vessels 11 exposed from the carousel 13. The temperature of the carousel 13 is regulated to 60 to 65°C that is an optimum temperature for the LAMP reaction. The reaction solutions in the reaction vessels 11 installed thereon are heated to the same temperature as that of the carousel 13. On the other hand, the heating block 15 as the heat source of the carousel is kept at a higher temperature than that of the carousel 13 since the heating block 15 heats the carousel without contacting. By blowing the air heated by the heating block 15 having a higher temperature than that of the carousel 13 to the upper exposed portions of the reaction vessels 11, the upper exposed portions of the reaction vessels 11 are selectively heated, and the temperature thereof can be kept at least equal to or higher than the temperature of the vessel lower portions inside the carousel 13. Accordingly, components evaporating inside the reaction vessels 11 are prevented from causing condensation on the upper exposed portions. Also, the rotating speed of the rotor blade 17 may be changed to automatically control the air volume in accordance with temperature changes of the carousel 13, the heating block 15, and the air temperature inside the amplification chamber 12.

The air blown to the upper exposed portions of the reaction vessels 11 is circulated from the external side of the carousel 13 to the bottom side thereof, passes through a hole provided around the center of the carousel 13 and the heating block 15, and is circulated back to the vicinity of the rotor blade again.

In a case where a temperature rise in the upper exposed portions of the reaction vessels 11 is slower than that in the vessel lower portions inside the carousel, condensation may temporarily occur on the upper exposed portions. In order to solve the problem, the upper portion of the reaction vessel 11 is selectively preliminarily heated before the reaction vessel 11 is installed on the carousel 13 in the present embodiment.

FIG. 5 shows the reaction vessel 11, and a vessel holder (referred to as chuck below) of the transfer robot for transferring and installing the reaction vessel 11 on the carousel 13. At the time of transferring the reaction vessel 11, the transfer robot lowers the tip chuck 28 from the top portion of the reaction vessel 11 first, and inserts a claw inside the top end of the chuck 28 along a vertical groove provided in the outer side surface of the lid 9. After lowering the chuck a predetermined amount, the transfer robot rotates the chuck to slide the claw into a traverse groove connected at a right angle from the vertical groove, lifts the reaction vessel 11, and transfers the reaction vessel 11. A heater (not shown) is wound around the outer periphery of the chuck 28, and the lid 9 inserted into the chuck 28 is heated to the same temperature as or a temperature close to that of the carousel 13 via the chuck 28. That is, the transfer robot can selectively preliminarily heat the upper portion of the reaction vessel 11 at the same time as transferring the reaction vessel 11 from a stand-by position to the carousel 13 and installing the reaction vessel 11 on the carousel 13. Accordingly, the condensation possibly occurring immediately after the installation on the carousel 13 is easily prevented.

With the aforementioned condensation preventing means, a change in concentration or solution level of the reaction solution due to the condensation can be prevented, and more accurate fluorescence measurement can be achieved since the fluorescence measurement performed through the lid of the reaction vessel is not disturbed by the condensation.

## Claims

1. A nucleic acid analyzer for performing sequential processing in which a plurality of sealed reaction vessels capable of holding nucleic acids are sequentially fed to a nucleic acid amplification unit, comprising
a vessel mounting rack capable of holding the plurality of reaction vessels,
wherein the reaction vessel mounted on the vessel mounting rack is heated by an adjacent noncontact heat source and air circulation from the heat source to an upper portion of the reaction vessel, and a temperature of the upper portion of the reaction vessel is kept higher than a temperature of a lower portion of the reaction vessel.

2. The nucleic acid analyzer according to claim 1, wherein the sealed reaction vessel is a sealed reaction vessel with a lid.

3. The nucleic acid analyzer according to claim 1, wherein the nucleic acids are measured by fluorescence measurement through the sealed reaction vessel.

4. The nucleic acid analyzer according to claim 1, wherein the vessel mounting rack moves and stops along a circulating path in a predetermined cycle.

5. The nucleic acid analyzer according to claim 1, wherein the mounting rack is a carousel.

6. The nucleic acid analyzer according to claim 1, wherein the heat source is switched between a contact state and a noncontact state with respect to the mounting rack.

7. The nucleic acid analyzer according to claim 1, wherein a robot for transferring the reaction vessel to the mounting rack and installing the reaction vessel thereon selectively preliminarily heats the upper portion of the reaction vessel before the installation.
